# EUROPÄISCHE PATENTSCHRIFT

(11) **EP 3 468 735 B1**
(45) Veröffentlichungstag und Bekanntmachung des Hinweises auf die Patenterteilung: **15.05.2024**
(21) Anmeldenummer: 17732828.3
(22) Anmeldetag: 13.06.2017
(51) Int. Cl.: B23C 3/02, B23C 5/10, F02F 3/22, B23P 15/10, B08B 3/02

(54) **KÜHLKANALÖFFNUNG DURCH ZIRKULARFRÄSOPERATION**
COOLING CHANNEL OPENING BY MEANS OF CIRCULAR MILLING OPERATION
OUVERTURE DU CANAL DE REFROIDISSEMENT PAR UNE OPÉRATION À LA FRAISE CIRCULAIRE

(30) Priorität: 13.06.2016 DE 102016210395
(43) Veröffentlichungstag der Anmeldung: 17.04.2019
(73) Patentinhaber: KS Large Bore Pistons Germany GmbH, 74172 Neckarsulm (DE)
(72) Erfinder: KÖHLER, Wolfgang, 74252 Massenbachhausen (DE); KRÄMER, Dieter, 74080 Heilbronn (DE); LEPPLA, Florian, 74743 Seckach-Grosseicholzheim (DE)
(74) Vertreter: Dennemeyer & Associates S.A.
(86) Internationale Anmeldenummer: PCT/EP2017/064433
(87) Internationale Veröffentlichungsnummer: WO 2017/216172

(56) Entgegenhaltungen:
- EP-A1- 1 431 562
- EP-A1- 2 633 932
- DE-A1-102007 012 979
- DE-A1-102008 035 698
- DE-A1-102012 002 376
- GB-A- 2 054 792
- TW-B- I 508 804

## Beschreibung

Die Erfindung betrifft ein Verfahren zur Herstellung eines Kühlkanalkolbens, wobei ein Rohling des Kühlkanalkolbens, der einen als Kühlkanal ausgebildeten Hohlraum aufweist, bereitgestellt und bei dem eine Zulauf- oder Ablauföffnung in Richtung des Kühlkanales in den Rohling eingebracht wird.

Bei bekannten Fräs- oder Bohrvorgängen, mit denen eine Durchgangsöffnung in ein Vollmaterial in Richtung eines Hohlraumes eingebracht wird, entstehen in nachteiliger Weise Späne, die auch in den Hohlraum eindringen und dort verbleiben können. Insbesondere bei Kühlkanalkolben sind solche Späne bzw. allgemein Reste des Bohr- oder Fräsvorganges von Nachteil, da diese in den Ölkreislauf der Brennkraftmaschine gelangen und dort zu Störungen führen können.

Um diese Nachteile zu beseitigen, ist schon daran gedacht worden, ein elektrochemisches Bohrverfahren (ECM-Verfahren) einzusetzen. Mit diesem Verfahren wird zwar nahezu wirksam vermieden, dass Teilchen in den Hohlraum (bei Kolben in den Kühlkanal) gelangen können. Jedoch handelt es sich um ein chemisches Verfahren, welches einerseits von Nachteil ist, da es die Umwelt belastet und andererseits ebenso von Nachteil ist, dass damit nicht die gewünschten Taktzeiten bei der Serienherstellung von Kolben erzielbar sind.

Die EP 1 431 562 A1 beschreibt ein Verfahren zur Herstellung eines Kühlkanalkolbens für eine Brennkraftmaschine, wobei von einem Innenbereich des Kühlkanalkolbens zumindest eine Öffnung in Richtung eines Kühlkanals hergestellt wird, wobei die Öffnung durch einen Zirkularfräsvorgang hergestellt wird.

Der Erfindung liegt daher die Aufgabe zu Grunde, die eingangs geschilderten Nachteile zu vermeiden und ein verbessertes Verfahren zu Einbringen von Durchgangsöffnungen in Vollmaterial in Richtung eines Hohlraumes, insbesondere bei der Herstellung von Kühlkanalkolben, bereitzustellen.

Bezüglich des Verfahrens ist vorgesehen, dass zunächst auf beliebige und bekannte Art und Weise ein Rohling eines Kühlkanalkolbens bereitgestellt wird (zum Beispiel ein ein- oder mehrteiliger gegossener oder geschmiedeter Rohling, wobei diese Aufzählung nicht abschließend ist) und nach der Erfindung die Öffnung durch einen CNC-gesteuerten Zirkularfräsprozess unter Verwendung eines Spezialfräsers mit in einem Wellenprofil angeordneten Stirnschneiden in den Rohling eingebracht wird. Dabei wird ein Spezialfräser mit einem Spitzenwinkel im Bereich von 170 Grad bis 180 Grad, insbesondere von 174 Grad, angewendet wird, wobei nach dem Einbringen der Öffnung der Kühlkanal einem Hochdruckspülvorgang unterzogen wird.

Gelöst wird die Aufgabe somit durch ein Verfahren nach Anspruch 1, insbesondere durch eine spezielle Form eines Fräswerkzeuges, mit dem vermieden wird, dass Teilchen, insbesondere Späne, in den Hohlraum gelangen können. Dieser Fräser hat in einem Wellenprofil angeordnete Stirnschneiden, sodass mittels des CNC-gesteuerten Zirkularfräsprozesses die Durchgangsöffnung in das Vollmaterial eingebracht werden kann. Die spezielle Anordnung der Schneiden des Fräswerkzeuges hat den Vorteil, dass nur sehr sehr kleine Teilchen entstehen können, die mittels geeigneter Formgebung (spiralartige Kanalform, wegweisend von den Stirnschneiden) des Fräsers von dem Hohlraum weggeführt werden. Sollten dennoch solche Teilchen in den Hohlraum eindringen, können diese mit einem nachfolgenden Spülprozess aus dem Hohlraum vollständig ausgespült werden, da sie eine Dimension aufweisen, die wesentlich (sehr deutlich) kleiner ist als der Querschnitt der Durchgangsbohrung, in die in das Vollmaterial (des Rohlings) eingebracht wird. Außerdem wird mittels der im Wellenprofil angeordneten Stirnschneiden wirksam vermieden, dass beim Durchtritt des Fräswerkzeuges aus dem Vollmaterial in Richtung des Hohlraumes eine Art Deckel (wie im Stand der Technik) entsteht, der entweder an dem Vollmaterial hängen bleibt und bei einem Kühlkanalkolben zum Beispiel den Ölfluss in den Kühlkanal behindert oder sich sogar löst und eigenständig in dem Hohlraum verbleibt, was zu den gleichen Nachteilen führt.

Der Spezialfräser (auch Zirkularfräser genannt) besitzt einen Spitzenwinkel im Bereich von 170 Grad bis 180 Grad, insbesondere von 174 Grad, um eine "Deckelbildung" beim Austreten aus dem Vollmaterial des Kolbenrohlings (in den Kühlkanal) zu vermeiden. Des Weiteren kann der Zirkularfräser zumindest zwei, insbesondere jedoch mehr als zwei Zahnreihen (vorzugsweise genau drei) aufweisen, die wellenartig gestaltet sind. Die Wellen jeder einzelnen Zahnreihe überdecken vorzugsweise die der folgenden Zahnreihe.

Aufgrund der CNC-Steuerung des Zirkularfräsprozesses können jede beliebigen Querschnitte und Längsgeometrien der Durchgangsöffnung eingebracht werden. Hinsichtlich der Längsgeometrien ist beispielsweise eine trompetenförmige, eine trichterförmige oder andere Geometrie denkbar. Bei Kühlkanalkolben sind nach außen hin aufgeweitete Längsgeometrien der Durchgangsöffnung von Vorteil, da sie in einem solchen Fall als Fangtrichter für den einzuspritzenden Ölstrahl fungieren. Hinsichtlich des Querschnittes der Durchgangsöffnung kommen runde, längliche und andere beliebige Geometrien in Betracht, die mittels des Zirkularfräsprozesses realisierbar sind. Das Zirkularfräsen ist ein Stirn-/Umfangsfräsen mit kreisförmiger Vorschubbewegung des Werkzeuges um seine Längsachse (spiralförmiges Eintauchen ins Material).

Bezüglich des Kühlkanalkolbens ist ein Kühlkanalkolben bereitgestellt, der einen Kühlkanal und zumindest eine Zulauf- und/oder zumindest eine Ablauföffnung in Richtung eines Kühlkanales aufweist und bei dem eine Zulauf- oder Ablauföffnung in Richtung des Kühlkanales durch einen CNC-gesteuerten Zirkularfräsprozess unter Verwendung eines Spezialfräsers mit in einem Wellenprofil angeordneten Stirnschneiden und anschließendem Hochdruckspülvorgang eingebracht wird. Diesbezüglich gelten die gleichen Vorteile wie schon vorstehend in Bezug auf das Verfahren erläutert.

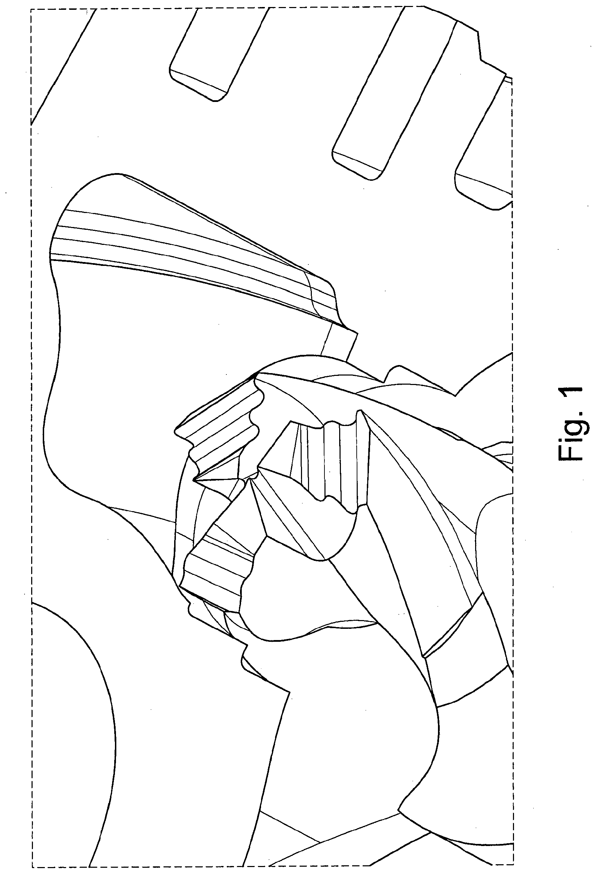

Figur 1 zeigt beispielhaft die in einem Wellenprofil angeordneten Stirnschneiden eines Spezialfräsers.

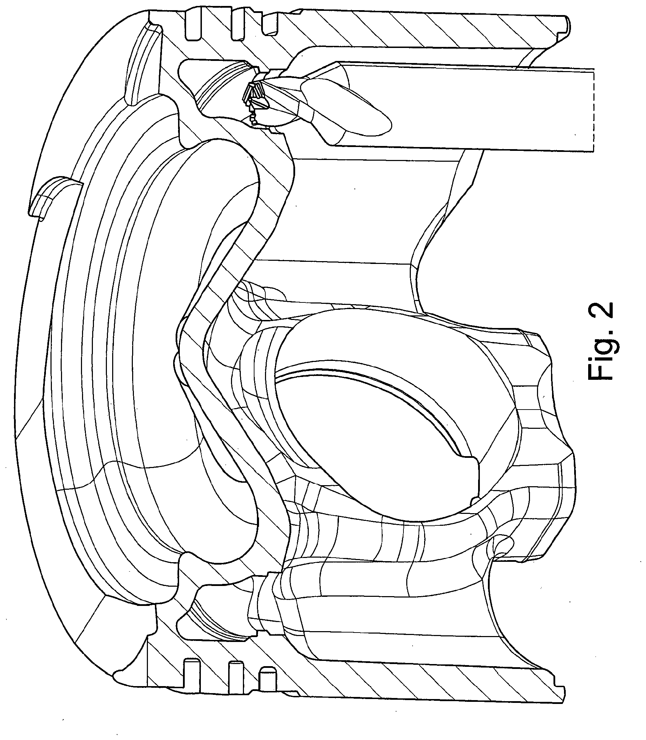

Figur 2 zeigt das Werkzeug gemäß Figur 1 bei der Bearbeitung einer Zulauf- oder Ablauföffnung in Richtung eines Kühlkanales eines Kolbens einer Brennkraftmaschine.

Nicht gezeigt, aber erforderlich ist ein Ausspülprozess, nachdem die Durchgangsöffnung mittels des Spezialfräsers ausgeführt worden ist, um Teilchen aus dem Hohlraum zu entfernen, falls solche dort eingedrungen sind. Da jedoch der Spezialfräser mit seinen im Wellenprofil angeordneten Stirnschneiden nur sehr kleine Teilchen während des Zirkularfräsprozesses erzeugt, können diese ohne Weiteres aufgrund des Hochdruckspülvorganges aus dem Hohlraum, insbesondere dem Kühlkanal des Kolbens, wirksam und vollständig entfernt werden. Dadurch lässt sich auch die Taktzeit bei der Serienherstellung von Kolben, insbesondere gegenüber dem ECM-Verfahren, deutlich reduzieren. Außerdem ist ein weiterer Vorteil dadurch gegeben, dass die Maschine und der Betrieb des Spezialwerkzeuges sowohl in der Anschaffung als auch im Unterhalt deutlich kostengünstiger ist, als Maschinen und Betriebsmittel, die für das ECM-Verfahren benötigt werden.

## Patentansprüche

1. Verfahren zur Herstellung eines Kühlkanalkolbens, wobei ein Rohling des Kühlkanalkolbens, der einen als Kühlkanal ausgebildeten Hohlraum aufweist, bereitgestellt und bei dem eine Zulauf- oder Ablauföffnung in Richtung des Kühlkanales in den Rohling eingebracht wird, und die Öffnung durch einen CNC-gesteuerten Zirkularfräsprozess unter Verwendung eines Spezialfräsers mit in einem Wellenprofil angeordneten Stirnschneiden in den Rohling eingebracht wird, wobei ein Spezialfräser mit einem Spitzenwinkel im Bereich von 170 Grad bis 180 Grad, insbesondere von 174 Grad, angewendet wird, und wobei nach dem Einbringen der Öffnung der Kühlkanal einem Hochdruckspülvorgang unterzogen wird.

2. Verfahren nach Anspruch 1, **dadurch gekennzeichnet, dass** Teilchen, die bei Ausführung des Zirkularfräsprozesses entstehen können, mittels einer spiralartigen Kanalform, wegweisend von den Stirnschneiden des Fräsers von dem Hohlraum weggeführt werden.

## Claims

1. A method for producing a cooling channel piston, wherein a blank of the cooling channel piston, which has a cavity formed as a cooling channel, is provided and wherein an inlet or outlet opening is introduced into the blank in the direction of the cooling channel, and the opening is created in the blank by a CNC-controlled circular milling process using a special milling cutter with end cutting edges arranged in a wave profile, wherein a special milling cutter with a point angle in the range of 170 degrees to 180 degrees, in particular 174 degrees, is used, and wherein the cooling channel is subjected to a high-pressure rinsing process after the opening has been inserted.

2. The method according to claim 1, **characterised in that** particles that may be produced during the circular milling process are guided away from the cavity by means of a spiral-like channel shape, pointing away from the end cutting edges of the milling cutter.

## Revendications

1. Procédé de fabrication d'un piston à canal de refroidissement, dans lequel est fournie une ébauche du piston à canal de refroidissement qui présente une cavité conçue comme un canal de refroidissement et dans laquelle une ouverture d'entrée ou de sortie est pratiquée dans l'ébauche en direction du canal de refroidissement, et l'ouverture est pratiquée dans l'ébauche par un processus de fraisage circulaire commandé par CNC à l'aide d'une fraise spéciale dotée de tranchants frontaux agencés dans un profil ondulé, une fraise spéciale ayant un angle de pointe dans la plage de 170 degrés à 180 degrés, en particulier de 174 degrés, étant utilisée, et le canal de refroidissement étant soumis à un processus de rinçage haute pression une fois que l'ouverture a été pratiquée.

2. Procédé selon la revendication 1, **caractérisé en ce que** les particules, qui peuvent être produites lors de la réalisation du processus de fraisage circulaire, sont évacuées de la cavité au moyen d'une forme de canal spiralée, en s'éloignant des tranchants frontaux de la fraise.
